(19) Europäisches Patentamt
European Patent Office
Office européen des brevets

(11) EP 2 101 532 A1

(12) EUROPEAN PATENT APPLICATION

(43) Date of publication:
16.09.2009 Bulletin 2009/38

(51) Int Cl.:
*H04W 28/16* (2009.01)    *H04L 5/02* (2006.01)
*H04L 5/00* (2006.01)

(21) Application number: 09154934.5

(22) Date of filing: 11.03.2009

(84) Designated Contracting States:
AT BE BG CH CY CZ DE DK EE ES FI FR GB GR
HR HU IE IS IT LI LT LU LV MC MK MT NL NO PL
PT RO SE SI SK TR
Designated Extension States:
AL BA RS

(30) Priority: 12.03.2008 IN DE06272008

(71) Applicant: C-DOT
Alcatel-Lucent Research center Private Limited
110030 New-Dehli (IN)

(72) Inventors:
• Manuprathap, Manoharan
Chennai, TamilNadu (IN)
• Dhiraviam, Natarajan
Chennai, TamilNadu (IN)

(74) Representative: Korakis-Ménager, Sophie
Alcatel Lucent
Intellectual Property & Standards
54, rue La Boétie
75008 Paris (FR)

(54) **Method and System for Dynamic Adaptation of Size and Frequency of Ranging and Bandwidth Allocation.**

(57)    Method of dynamic adaptation of size and frequency of ranging allocation comprising the steps of identifying the CDMA codes for opportunity, decoding successful codes for opportunity, finding total number of unsuccessful opportunities, finding number of opportunities required for next allocation, comparing total opportunities required with the size of ranging allocation of the previous frame and maximum allowable ranging allocation per frame and allocating new frequency and size for the next frame. It also relates to a scheduler for dynamic adaptation of size and frequency of ranging allocation for use in a base station (BS) as comprising an uplink frame identifier to identify the received CDMA codes per opportunity, a correlator to decode success code per opportunities, a processor configured to calculate total number of unsuccessful opportunities, the absolute value of opportunities required for next allocation, the total number of opportunities required for the next allocation and compare total opportunities required with the size of ranging allocation of the previous frame and maximum allowable ranging avocation per frame, a memory unit for storing data such as New_Req and Pre and an allocator for allocating new frequency and size for the next frame.

Fig 2 - Method of Dynamic adaptation of size and frequency of ranging /Bandwidth Allocation

**Description**

**Field of invention**

The present invention relates to wireless communication. In particular this invention relates to dynamic adaptation of frequency and size for bandwidth requests for ranging allocation in orthogonal frequency-division multiple access (OFDMA) systems.

**Background of the invention**

Orthogonal Frequency Division Multiplexing Access (OFDMA) is an access scheme of a two-dimensional grid combining Time Division Access (TDM) with Frequency Division Access (FDM). In OFDMA, data symbols are delivered on subcarriers that form subchannels. Depending on system situation, a predetermined number of subcarriers form one subchannel.

Ranging is the procedure for a Subscriber Station (SS) to join a network or to change Base Stations (BSs) as a result of a hand-off. For application of Time Division Duplexing (TDD) to the OFDMA communication system, ranging is required to acquire accurate timing synchronization between the Subscriber station and the Base Station and adjust the reception power of the BS on the uplink. In each OFDMA frame a ranging channel has a plurality of subchannels for transmitting a ranging signal. The IEEE 802.16 communication systems use the OFDM/OFDMA communication scheme. Thus, they perform a ranging procedure by transmitting a randomly selected ranging code on a plurality of subchannels.

The Subscriber Station performs different types of ranging depending on the current connection state like Initial Ranging, Handover Ranging, Periodic Ranging and Bandwidth Request. Initial Ranging happens when a network entry is made to indicate presence of the Subscriber and synchronize the timing. Handover ranging supports mobility and performs handoff from one Access Point to another. Periodic ranging updates and tracks variations in timing offset and Carrier Frequency Offset. Bandwidth ranging requests access to the shared spectrum resource.

Ranging is contention based. When two SSs when uses the same code number it leads to contention. A SS randomly selects a slot in the contention region to transmit a ranging code, so collisions occur when multiple stations select the same slot. If different code numbers are selected (random selected in the SS) then the BS can differ and multiple access is detected.

There are two types of contention based ranging region allocations. The first type is used for initial Ranging and handover ranging, referred to as Initial Ranging / Handover Ranging Allocations and the second type of allocation is for periodic ranging and bandwidth request, referred to as Periodic Ranging / Bandwidth Request Allocations. Both types of allocations are done using the same information element (IE).

Both the regional allocations defined above are defined as rectangular allocations. Each allocation consists of one or more ranging slots. A ranging opportunity that contains multiple ranging slots depending on the dimensions of a slot on the allocation and the specified number of symbols over which ranging is performed. For Initial / Handover ranging the choice is 2 symbols, while for Periodic / Bandwidth request the choice is 1 symbol.

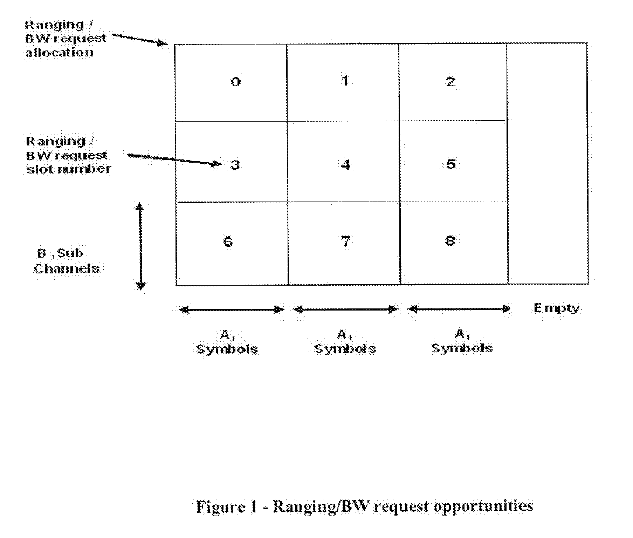

Figure 1 describes the fixed size slot allocation scheme. In a fixed size slot allocation scheme, the ranging allocation is subdivided into slots of $A_1$ OFDMA symbols by $B_1$ subchannels, in a time first order, i.e. the first opportunity begins on the first symbol of the first subchannel of the ranging allocation, the next opportunities appear in ascending order in the same subchannel, until the end of the ranging/BW request allocation (or until there are less than $A_1$ symbols in the current subchannel), and then the number of subchannel is incremented by $B_1$. The ranging allocation is not required to be a whole multiple of $A_1$ symbols, so a gap may be formed as shown in Figure 1.

The number of the contention slots affects the system performance, because it affects the access delay of new users and the data transmission delay of the registered users. Therefore a ranging solution based on the dynamic adaptation of size and frequency of ranging allocations for OFDMA Physical Layer must be developed.

**Summary of the invention**

Normally the size and frequency of the ranging allocations are fixed. But based on the criteria like network conditions and number of requests; the ranging allocation can be varied for optimisation. The invention proposes a novel and inventive method of ranging regions allocation that can be increased for more number of requests and it can be reduced for less number of requests. The invention also proposes a novel method of how often these regions have to be provided it may be calculated based on the above-mentioned criteria.

In an embodiment of the invention a method of dynamic adaptation of size and frequency of ranging allocation is defined as comprising the steps of identifying the CDMA codes for opportunity, decoding successful codes for opportunity, finding total number of unsuccessful opportunities, finding number of opportunities required for next allocation,

comparing total opportunities required with the size of ranging allocation of the previous frame and maximum allowable ranging allocation per frame and finally allocating new frequency and size for the next frame.

In an other embodiment of the invention, a scheduler for dynamic adaptation of size and frequency of ranging allocation for use in a base station (BS) is defined as comprising an uplink frame identifier to identify the received CDMA codes per opportunity, a correlator to decode success code per opportunities, a processor configured to calculate total number of unsuccessful opportunities, the absolute value of opportunities required for next allocation, the total number of opportunities required for the next allocation and compare total opportunities required with the size of ranging allocation of the previous frame and maximum allowable ranging allocation per frame, a memory unit for storing data and an allocator for allocating new frequency and size for the next frame.

## Brief Description of drawings

Fig 1 describes fixed size slot allocation scheme of ranging / BW request opportunities showing sub channels and symbols.
Fig 2 describes the method of Dynamic adaptation of size and frequency of Ranging/Bandwidth allocations.
Fig 3 describes a scheduler for Dynamic adaptation of size and frequency of Ranging/Bandwidth allocations for use in a base station.

## Detailed description

The Subscriber station selects the random opportunities and random CDMA codes for the ranging or bandwidth allocation. This is sent to the Base station.

The ranging codes are classified as S, O, N, M & L
where S is the starting number between S and ((S+O+N+M+L) mod 256)

O : Number of handover ranging codes
N : Number of initial ranging codes
M : Number of periodic ranging codes

L : Number of bandwidth request codes

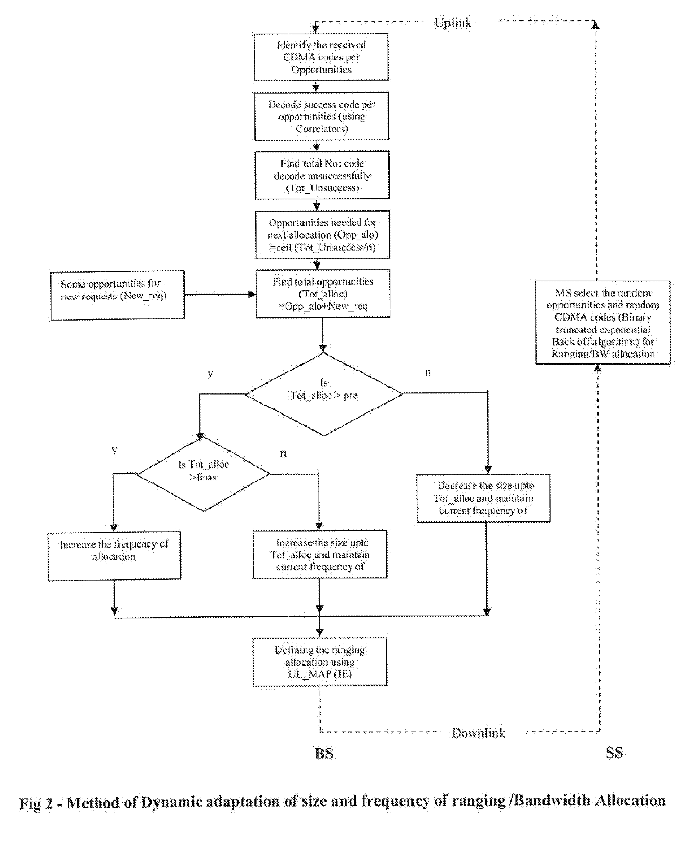

Figure 2 describes the method of dynamic adaptation in accordance to the embodiment of the present invention. At the base station the scheduler as per the present invention, receives the uplink frame. The uplink frame consists of codes define the opportunity and which is identified by the identifier at Step 1.

In step 2, the Codes defined are then decoded to by means of a correlator and decoder to find the successful number of codes (Tot_Success) received by the scheduler at the specified opportunity.

In step 3 the total number of codes (Tot) found in the previous steps is now used to calculate the total number of unsuccessful codes (Tot_Unsucces) taking into account the successful codes (Tot_Success) received at step 2. It is calculated as

$$Tot\_Unsucces = Tot - Tot\_Success$$

equation (1)

These unsuccessful codes have to be retransmitted in the next Uplink frame. Thus a next allocation has to incorporate these unsuccessful transmissions. However there are a certain number of CDMA codes a receiver can decode per opportunity without error, defined herein as (n). For purpose of ease and as per existing technology of the receiver the value of n is calculated as 4. In step 4 the opportunities needed for the next allocation (Opp_alo) is calculated. This is a found by dividing the unsuccessful code with the (n). This value is taken as a whole and no fractions are considered as it relates to number of frames. Since the frames can only be taken as a whole number the value of required frames is also rounded off to the next whole digit. Thus

$$Opp\_alo = ceil (Tot\_Unsuccess / n) \qquad \text{Equation (2)}$$

Where n is the number of CDMA codes a receiver can decode per opportunity without error.

These previous calculations are now used to find total opportunities (Tot_alloc) that are required to then calculate the dynamic value for the ranging allocation. However before such calculation an estimation of new opportunities has to be taken into account. This estimation is based on the total number of subscribers who can access the particular base station at a given point of time. This new request (New_Req) is taken as a constant after estimation, however they can be changed based on further estimations whenever required. The number of new subscribers may increase or decrease based on the actual number of subscribes in the previous frame. They may also be made dynamically updating based on the actual request received during the previous frame. The total opportunities are calculated by adding the opportunity needed for next allocation (Opp_Alo) and opportunities for new requests (New_Req).

$$Tot\_alloc = Opp\_alo + New\_Req \qquad \text{Equation (3)}$$

The size of ranging allocation in terms of OFDMA symbol and sub channels in previous frame (Pre) is noted and kept in memory which is used for comparing between the total opportunities to be allocated (Tot_alloc) for the next frame and the previous range allocation (Pre). When the total opportunities (Tot_alloc) required for the new frame is greater than the range allocation in the previous frame (Pre), then a further comparison is done. Fmax is defined as the maximum allowable range allocation per frame that is the maximum value and limits any further allocation of ranges within a frame. Taking this Fmax into account, a comparison of the total opportunities to be allocated (Tot_alloc) and Fmax is done.

When the total opportunities to be allocated (Tot_alloc) for the next frame is greater than the maximum allowable ranging allocation within a frame, then an increase in frequency of allocation is done. Since the present frame would not take up more opportunities than the maximum allowable Fmax. However if total opportunities to be allocated (Tot_alloc) for the next frame is lesser than the maximum allowable ranging allocation within a frame, a new size is determined maintaining the current frequency of allocation. The new size is increased up to the value of Tot_alloc to accommodate all required opportunities within the next frame.

On the other hand, when the total opportunities (Tot_alloc) required for the new frame is lesser than the range allocation in the previous frame (Pre), an adaptation in terms of size is done. This new size would be decreased upto the value of Tot_alloc maintaining the current frequency of allocation. This decrease of size is to improve the efficiency and decrease the wastage, as the total allocation would be less then the frame size.

This dynamic adaptation of size and frequency of the ranging allocation ensures that optimal range is selected for the next frame decreasing the number of the contention slots affecting the performance of the system. The result obtained from this process is implemented on to the allocator. The frame size or frequency of the next frame is calculated and communicated to the Subscriber System in the UL_MAP that is present in the information element of the downlink frame. This allocator is designed taking into account each region (ie. Region 1 and Region 2) and calculating the symbols and subchannels.

Other parameters than those provided also affect the size and frequency of ranging/ bandwidth request region. These parameters that significantly affect the size and frequency of the request is taken into consideration by the scheduler before allocating the size and frequency of the next frame. Some of the parameters are given herewith but the scope of the invention is not limited only to these parameters.

*Parameters considered during Initial Ranging are*

Number of MSS having status = 'Abort' in first time Initial ranging.

Number of MSS needs Initial ranging (Failed in Normal Periodic ranging).

Incremental Power Step size - Default step size 1 dB (MSS that does not get RNG_RSP).

Number of MSS that enter new to the network (First time to network).

Number of MSS needs initial ranging in Sleep mode (Failed in Sleep mode Periodic ranging).

Number of MSS needs Initial ranging in Idle mode (With status = 'Abort').

Number of MSS needs initial ranging in Mobile Scanning process.

*Parameters considered during Handover Ranging are*

Number of MSS needs Handover (Getting better service from another BS).

*Parameters considered during Periodic Ranging are*

Number of MSS that needs Periodic ranging - Normal mode (Depends upon the mobility and channel conditions).
Number of MSS that needs to do initial ranging using 1 OFDMA symbols.
Number of MSS that needs good Quality of Service (QoS).
Number of MSS needs Periodic ranging in Sleep mode.
Number of MSS needs Periodic ranging in Idle mode (With status = 'continue').

*Parameters considered during Bandwidth Request are*

Number of active connections.
Number of MSS requesting Bandwidth depends upon the service classes.
These parameters are designed and adjusted by the service provider according to the requirement, optimisation and adaptation required to be performed by the scheduler.

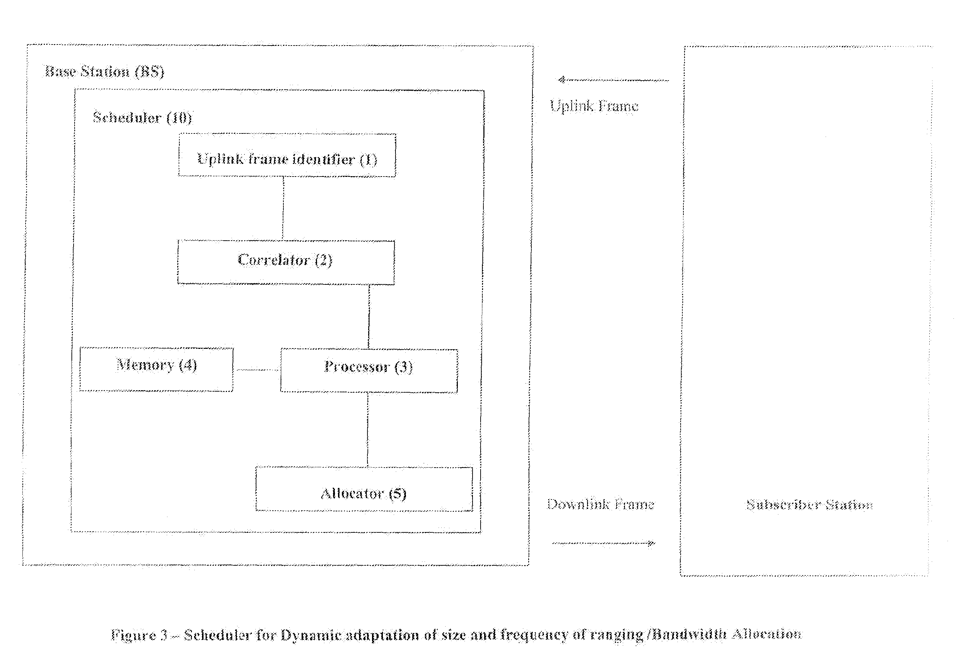

Figure 3 describes an embodiment of the scheduler as part of the Base Station. An uplink frame identifier (1) receives and identifies the CDMA codes per opportunities received from the uplink frame. This is further decoded by a correlator (2) which decodes the success codes per opportunity. A processor (3) calculates the total number of unsuccessful codes (Tot_Unsuccess) decoded and further configured to find the opportunities needed for next allocation (Opp_alo).
A memory unit (4) stores the required opportunities for new requests (New_Req) and range allocation in the previous frame (Pre). The processor (4) after finding the value of (Opp_alo) and receiving the value of New_Req from the memory unit (4) now calculates the total opportunities required (Tot_alloc) as defined in equation 3.
This processor now compares the value of Tot_Alloc with Pre obtained from the memory unit (4) and if Tot_Alloc is greater than Pre then the processor further compares Tot_Alloc with value of Fmax. These results of comparisons are then sent to the allocator (5) that then allocates the required frame size or frequency for the next frame.
The allocator (5) now increases the frequency of the allocation for the next frame if the comparison between Tot_alloc is greater than both Pre and Fmax. However if it is greater than Pre but less than Fmax then only the size is increased to accommodate upto the value of Tot_alloc maintaining the current frequency of allocation. On the other hand, if Tot_Alloc is less then Pre then the size of the next frame is decreased upto the value of Tot_Alloc avoiding wastage but maintaining the current frequency allocation.
This allocator (5) defines this ranging allocation on the UL_MAP in the downlink frame which is sent to the subscriber station. The SS now as defined by the UL_MAP performs adaptation of the next frame.
Using the method and the scheduler as per the present invention, one can effectively utilize the uplink subframe reducing the response time and the time duration between the subscriber station which sends the CDMA codes and receiving the RNG_RSP with success.
While several embodiments have been provided in the disclosure, it should be understood that the disclosed systems and methods may be embodied in many other specific forms without departing from the spirit or scope of the disclosure. The examples are to be considered as illustrative and not restrictive, and the intention is not to be limited to the details given herein, but may be modified within the scope of the appended claims along with their full scope of equivalents. For example, the various elements or components may be combined or integrated in another system or certain features may be omitted, or not implemented.
Also, techniques, systems, subsystems and methods described and illustrated in the various embodiments as discrete or separate may be combined or integrated with other systems, modules, techniques, or methods without departing from the scope of the disclosure. Other items shown or discussed as directly coupled or communicating with each other may be coupled through some interface or device, such that the items may no longer be considered directly coupled to each other but may still be indirectly coupled and in communication, whether electrically, mechanically, or otherwise with one another. Other examples of changes, substitutions, and alterations are ascertainable by one skilled in the art and could be made without departing from the spirit and scope disclosed herein.

## Claims

1. A method of dynamic adaptation of size and frequency of ranging allocation comprising the steps of :

identifying the CDMA codes for opportunity

decoding successful codes for opportunity

finding total number of unsuccessful opportunities

finding number of opportunities required for next allocation

comparing total opportunities required with the size of ranging allocation of the previous frame and maximum allowable ranging allocation per frame; and

allocating new frequency and size for the next frame.

2.  The method as claimed in claim 1 wherein the step of finding total number of unsuccessful opportunities (Tot_ Unsuccess) is calculated by subtracting the total number of codes (Tot) with the total number of successful codes (Tot_Success).

3.  The method as claimed in claim 1 wherein the step of finding total number of opportunities required for the next allocation (Tot_Alloc) is calculated by adding the opportunities required for next allocation (Opp-Alo) with opportunities for new requests (New_Req).

4.  The method as claimed in claim 3 wherein the absolute value of opportunities required for next allocation (Opp-Alo) is calculated by dividing the total number of unsuccessful opportunities (Tot_Unsuccess) by number of CDMA codes a receiver can decode per opportunity without error (n).

5.  The method as claimed in claim 1 wherein the total opportunities required (Tot_alloc) is greater than the size of ranging allocation of the previous frame (Pre) further comparison is performed between the total opportunities required (Tot_alloc) and maximum allowable ranging allocation per frame (Fmax).

6.  The method as claimed in claim 5 wherein the total opportunities required (Tot_alloc) is greater than maximum allowable ranging allocation per frame (Fmax), the frequency of the next frame is increased.

7.  The method as claimed in claim 5 wherein total opportunities required (Tot_alloc) is lesser than maximum allowable ranging allocation per frame (Fmax), the frequency of the next frame is maintained and the size is changed increasing it upto Tot_Alloc.

8.  The method as claimed in claim 1 wherein the total opportunities required (Tot_alloc) is lesser than the size of ranging allocation of the previous frame (Pre), the frequency of the next frame is maintained, the size is changed decreasing it upto the value of Tot_Alloc.

9.  The method as claimed in claim 1 wherein the step of allocating new frequency and size for the next frame is defined in the ranging allocation using UL_MAP of the downlink frame.

10. A scheduler (10) for dynamic adaptation of size and frequency of ranging allocation for use in a base station (BS) comprising;

an uplink frame identifier (1) to identify the received CDMA codes per opportunity;

a correlator (2) to decode success code per opportunities;

a processor (3) configured to calculate total number of unsuccessful opportunities (Tot_Unsuccess), calculate the absolute value of opportunities required for next allocation (Opp-Alo), calculate the total number of opportunities required for the next allocation (Tot_Alloc); and compare total opportunities required with the size of ranging allocation of the previous frame and maximum allowable ranging allocation per frame;

a memory unit (4) for storing data such as New_Req and Pre; and an allocator (5) for allocating new frequency and size for the next frame.

Figure 1 - Ranging/BW request opportunities

Uplink

Identify the received CDMA codes per Opportunities

Decode success code per opportunities (using Correlators)

Find total No: code decode unsuccessfully (Tot_Unsuccess)

Opportunities needed for next allocation (Opp_alo) =ceil (Tot_Unsuccess/n)

Some opportunities for new requests (New_req)

Find total opportunities (Tot_alloc) =Opp_alo+New_req

MS select the random opportunities and random CDMA codes (Binary truncated exponential Back off algorithm) for Ranging/BW allocation

Is Tot_alloc > pre

Is Tot_alloc >fmax

Decrease the size upto Tot_alloc and maintain current frequency of

Increase the frequency of allocation

Increase the size upto Tot_alloc and maintain current frequency of

Defining the ranging allocation using UL_MAP (IE)

Downlink

BS

SS

Fig 2 - Method of Dynamic adaptation of size and frequency of ranging /Bandwidth Allocation

8

EP 2 101 532 A1

Base Station (BS)

Scheduler (10)

Uplink frame identifier (1)

Correlator (2)

Memory (4)

Processor (3)

Allocator (5)

Uplink Frame

Downlink Frame

Subscriber Station

Figure 3 – Scheduler for Dynamic adaptation of size and frequency of ranging /Bandwidth Allocation

| Europäisches Patentamt European Patent Office Office européen des brevets | **EUROPEAN SEARCH REPORT** | Application Number EP 09 15 4934 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/012170 A (MOTOROLA INC [US]; ZHUANG XIANGYANG [US]) 2 February 2006 (2006-02-02) * page 5, line 19 - page 10, line 21 * * page 14, lines 21-33 * * page 15, lines 24-31; figures 3,5 * | 1,2,5,6, 9,10 | INV. H04W28/16 H04L5/02 H04L5/00 |
| A | ----- | 3,4,7,8 | |
| A | WO 2008/001205 A (NOKIA CORP [FI]; NOKIA INC [US]) 3 January 2008 (2008-01-03) * paragraphs [0005], [0031], [0032], [0035], [0036], [0049], [0058] * ----- | 1-10 | |
| A | US 2005/117539 A1 (SONG BONG-GEE [KR] ET AL SONG BONG-GEE [KR] ET AL) 2 June 2005 (2005-06-02) * abstract * * paragraphs [0015], [0016], [0023] - [0025], [0033] - [0042], [0050] - [0052], [0056], [0112] - [0114] * ----- | 1-10 | |
| A | US 2005/058058 A1 (CHO MIN-HEE [KR] ET AL) 17 March 2005 (2005-03-17) * abstract * * paragraphs [0009], [0010], [0013] - [0026], [0031], [0033], [0035], [0042] - [0045], [0047], [0053], [0071], [0082], [0109] * ----- | 1-10 | TECHNICAL FIELDS SEARCHED (IPC) H04W |

The present search report has been drawn up for all claims

| Place of search | Date of completion of the search | Examiner |
|---|---|---|
| Berlin | 2 July 2009 | Alonso Maleta, J |

EPO FORM 1503 03.82 (P04C01)

**ANNEX TO THE EUROPEAN SEARCH REPORT
ON EUROPEAN PATENT APPLICATION NO.**

EP 09 15 4934

This annex lists the patent family members relating to the patent documents cited in the above-mentioned European search report.
The members are as contained in the European Patent Office EDP file on
The European Patent Office is in no way liable for these particulars which are merely given for the purpose of information.

02-07-2009

| Patent document cited in search report | | Publication date | Patent family member(s) | | Publication date |
|---|---|---|---|---|---|
| WO 2006012170 | A | 02-02-2006 | EP 1762019 A2<br>KR 20070030288 A<br>KR 20080102418 A<br>US 2005286465 A1 | | 14-03-2007<br>15-03-2007<br>25-11-2008<br>29-12-2005 |
| WO 2008001205 | A | 03-01-2008 | US 2008002734 A1 | | 03-01-2008 |
| US 2005117539 | A1 | 02-06-2005 | KR 20050052124 A | | 02-06-2005 |
| US 2005058058 | A1 | 17-03-2005 | KR 20050014319 A | | 07-02-2005 |